# FASCICULE DE BREVET EUROPEEN

(11) **EP 1 713 023 B1**
(45) Date de publication et mention de la délivrance du brevet: **09.06.2010**
(21) Numéro de dépôt: 06112466.5
(22) Date de dépôt: 11.04.2006
(51) Int. Cl.: G06K 19/073, G07F 7/10, G06F 21/00

(54) **Protection de données contenues dans un circuit intégré**
Schutz von in einem integrierten Schaltkreis enthaltenen Daten
Protection of data contained in an integrated circuit

(30) Priorité: 11.04.2005 FR 0550924
(43) Date de publication de la demande: 18.10.2006
(73) Titulaire: ST MICROELECTRONICS S.A., 92120 Montrouge (FR)
(72) Inventeur: Romain, Fabrice, 83560, Rians (FR); Pomet, Alain, 13790, Rousset (FR)
(74) Mandataire: de Beaumont, Michel

(56) Documents cités:
- WO-A-99/35554
- WO-A-2005/027462
- US-B1- 6 247 151
- RALPH HEIDELBERG: "LCD MODULE TECHNICAL REFERENCE (FAQ)"[Online] 18 février 2001 (2001-02-18), XP002346546 Extrait de l'Internet: URL:http://de.groups.yahoo.com/group/c-con trol2/message/31> [extrait le 2005-09-26]
- "8051+LCD+EPROM"[Online] XP002346547 Extrait de l'Internet: URL:http://www.ustr.net/lcd001.shtml> [extrait le 2005-09-23]
- HAGAI BAR-EL ET AL: "The Sorcerer's Apprentice Guide to Fault Attacks" WORKSHOP ON FAULT DETECTION AND TOLERANCE IN CRYPTOGRAPHY, [Online] 7 mai 2004 (2004-05-07), XP002329915 Extrait de l'Internet: URL:http://www.gemplus.com/smart/rd/public ations/> [extrait le 2005-09-14]

## Description

### Domaine de l'invention

La présente invention concerne de façon générale les circuits électroniques et, plus particulièrement, la protection de données contenues dans un circuit intégré contre une extraction de ces données suite à des injections de fautes dans le fonctionnement du circuit. L'invention concerne plus particulièrement les cartes à puce et la protection des données confidentielles qu'elles contiennent.

### Exposé de l'art antérieur

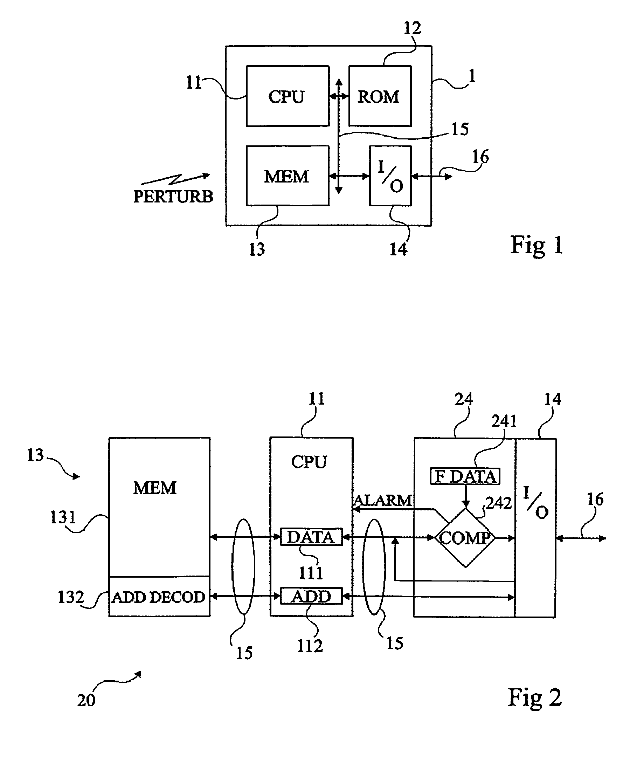

La figure 1 représente partiellement, de façon très schématique et sous forme de blocs, un exemple d'architecture simplifiée d'un circuit intégré 1, par exemple d'une carte à puce, du type auquel s'applique la présente invention.

Le circuit 1 comporte une unité centrale de traitement 11 (CPU) associée à une mémoire programme 12 (ROM) généralement de type mémoire morte, une ou plusieurs mémoires 13 (MEM) de données et un circuit 14 d'entrée/sortie (I/O) permettant l'échange de données avec l'extérieur du circuit 1. Les différents éléments communiquent par un ou plusieurs bus 15 de données, d'adresses et de commande. La ou les mémoires 13 peuvent être de n'importe quel type (mémoire vive, mémoire non volatile réinscriptible ou non, etc.) ou une combinaison de plusieurs types de mémoires.

Parmi les attaques possibles effectuées par des fraudeurs pour extraire des données confidentielles de la puce (par exemple, le code secret), l'invention s'applique aux attaques dites par injection de fautes (DFA ou "Differential Fault Analysis") qui consistent à perturber (PERTURB) le fonctionnement du composant 1 par exemple au moyen d'un rayonnement (laser, infrarouge, rayons X, etc.) ou par d'autres moyens (par exemple, en agissant sur l'alimentation du composant).

Certains circuits intégrés comprennent des outils logiciels pour détecter de telles perturbations par une vérification de l'exécution correcte des programmes. Par exemple, on exécute deux fois les mêmes instructions et on vérifie qu'elles conduisent aux mêmes résultats, ou on effectue un calcul de signature sur des données extraites de la mémoire 13.

Une catégorie de perturbations particulièrement efficaces consiste à perturber de façon directive (orientation d'un rayonnement), par exemple, sur les circuits périphériques (décodeur d'adresse) de la mémoire 13 pendant une commande de lecture d'une zone autorisée de cette mémoire. Par zone "autorisée", on entend une zone dont les données qu'elle contient sont autorisées à sortir du circuit intégré contrairement à celles de zones "protégées" contenant des données confidentielles devant rester dans le circuit 1. Perturber, par exemple, le décodeur d'adresses (supposé contenu dans le bloc 13) de la mémoire permet un saut d'une zone mémoire autorisée vers une zone mémoire protégée. Comme la commande exécutée est alors une commande de lecture mémoire autorisée, le fraudeur est susceptible de récupérer les données sensibles sans que les mécanismes de contrôle d'accès de la carte détectent cette violation d'accès. Par exemple, en cas de contrôle de l'adresse présente sur le bus 15 par l'unité centrale, celle-ci est correcte dans la mesure où la perturbation n'intervient que dans la zone périphérique de la mémoire 13. Les systèmes de protection logiciels sont le plus souvent inefficaces contre ce genre de fraude.

Un problème est d'être capable de détecter une telle perturbation. Une fois la perturbation détectée, de nombreuses solutions existent selon les applications pour soit bloquer le composant, soit interdire la sortie des données sensibles, etc.

Un autre inconvénient des solutions "logicielles" est qu'elles prennent du temps d'exécution sur la capacité de l'unité centrale de traitement.

### Résumé de l'invention

La présente invention vise à pallier tout ou partie des inconvénients des systèmes connus de protection de circuit intégré contre d'éventuelles fraudes par injection de fautes dans le fonctionnement du circuit.

L'invention vise plus particulièrement à proposer une solution qui permette de détecter une perturbation du décodeur d'adresse d'une mémoire du circuit.

L'invention vise également à éviter d'utiliser l'unité centrale de traitement pour effectuer la détection.

Pour atteindre tout ou partie de ces objets ainsi que d'autres, la présente invention prévoit un procédé selon la revendication indépendante 1.

Selon un mode de mise en oeuvre de la présente invention, ladite valeur est stockée dans un élément distinct de ladite mémoire.

Selon un mode de mise en oeuvre de la présente invention, ladite valeur est stockée de façon non volatile, de préférence, par inscription matérielle.

Selon un mode de mise en oeuvre de la présente invention, l'adresse d'un mot de données à lire dans la mémoire pour fourniture à l'extérieur du circuit est comparée à au moins une adresse stockée dans le circuit, ledit signal d'erreur étant généré en cas d'identité entre les deux adresses.

La présente invention prévoit également un circuit intégré selon la revendication indépendante 5.

Selon un mode de réalisation de la présente invention, ledit circuit de détection comporte des moyens de génération d'un signal d'erreur en cas d'identité entre lesdits mots de données.

Selon un mode de réalisation de la présente invention, un élément de stockage d'une adresse est contenu dans le circuit de détection.

La présente invention prévoit également une carte à puce contenant un circuit intégré.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment représente, de façon très schématique et sous forme de blocs, un exemple d'architecture simplifiée d'un microcontrôleur intégré du type auquel s'applique la présente invention ; et
la figure 2 représente, de façon très schématique et sous forme de blocs, un mode de réalisation d'un circuit de détection de tentatives de fraude selon la présente invention.

Les mêmes éléments ont été désignés par les mêmes références aux différentes figures. Pour des raisons de clarté, seuls les éléments qui sont utiles à la compréhension de l'invention ont été représentés aux figures et seront décrits par la suite. En particulier, l'exploitation faite de la détection de fraudes éventuelles n'a pas été détaillée, l'invention étant compatible avec l'exploitation faite classiquement d'une détection de tentative de fraude. De plus, on fera référence au terme "données" pour désigner n'importe quelle information numérique, qu'il s'agisse d'une donnée proprement dite ou d'une information d'un programme.

### Description détaillée

La figure 2 représente partiellement, de façon très schématique et sous forme de blocs, un mode de réalisation d'un circuit intégré 20 selon la présente invention. Ce circuit 20 est, par exemple, contenu dans une carte à puce.

Comme précédemment, un circuit intégré du type auquel s'applique l'invention comporte une unité centrale de traitement 11 (CPU), une ou plusieurs mémoires 13 symbolisées ici par un plan mémoire 131 (MEM) et son décodeur d'adresse 132 (ADD DECOD) et un circuit 14 d'entrée/sortie (I/O). Le circuit comporte également une mémoire programme (12, figure 1). Celle-ci n'a pas été illustrée en figure 2 car l'invention protège également une tentative de fraude par perturbation du fonctionnement de cette mémoire programme pour en extraire des informations confidentielles (par exemple, une clé native, inscrite à la fabrication du circuit). L'invention sera donc exposée en relation avec l'exemple d'une mémoire 13 mais elle s'applique à n'importe quelle mémoire intégrée dans le circuit que l'on souhaite protéger. L'unité centrale 11 comporte (ou est associée à), de façon classique, un registre de données 111 et un registre 112 d'adresse pour stockage temporaire et contrôle du fonctionnement de la mémoire.

Selon le mode de réalisation de la figure 2, le circuit 20 comporte un circuit 24 de détection d'une tentative de sortie de données protégées. Ce circuit comporte un élément 241 (FDATA) de mémorisation d'un ou plusieurs mots (par exemple de 64 bits) de données constituant des valeurs "interdites", c'est-à-dire que l'on considère comme indiquant une tentative de fraude, et un élément 242 de comparaison du ou des mots contenus dans l'élément 241 par rapport à un mot de données extrait de la mémoire 13 et fournit, par exemple, par le registre 111.

Selon ce mode de réalisation de la présente invention, des valeurs interdites sont stockées, par exemple, lors de l'initialisation du circuit, lors de sa fabrication ou à n'importe quel autre moment approprié pour le fonctionnement recherché, dans la mémoire 131 à des adresses non susceptibles d'être appelées en fonctionnement normal, ou non susceptibles d'être appelées par des programmes d'entrée/sortie vers l'extérieur.

Ainsi, si un saut d'adresse lié à une perturbation (accidentelle ou volontaire) du composant conduit à extraire l'un de ces mots interdits, celui-ci est détecté par le comparateur 242 qui génère un signal ALARM, par exemple, à destination de l'unité centrale 11 pour prendre les mesures appropriées (par exemple blocage du composant, réinitialisation, etc.). Le signal ALARM constitue, de préférence, une interruption prioritaire pour l'unité centrale. En variante, le signal ALARM réinitialise directement le circuit.

De préférence, les mots interdits sont stockés dans la mémoire 131 aux bornes de plages des zones de cette mémoire contenant des informations à protéger. Cela permet de détecter une tentative de fraude par lecture séquentielle.

Selon un mode de réalisation, les valeurs interdites contenues dans le registre 241 et dans la mémoire 131 sont programmables par l'utilisateur. Un tel mode de réalisation permet de garantir que les valeurs interdites ne soient pas susceptibles de correspondre à des données autorisées dans la mesure où l'utilisateur connaît les données susceptibles d'être stockées dans le plan mémoire.

En variante, ces valeurs interdites sont choisies pour avoir une probabilité faible d'être présentes dans des données autorisées (par exemple un train de 0 ou un train de 1), ce qui permet qu'elles soient stockées de façon définitive à la fabrication.

Selon un autre mode de réalisation de la présente invention, des adresses interdites sont stockées dans un registre (non représenté) du circuit 24 afin d'être comparées aux adresses ADD contenues dans le registre 112 des données extraites de la mémoire pour sortie vers l'extérieur. Un tel mode de réalisation peut être combiné avec le précédent et ajoute une sécurité supplémentaire en autorisant la détection d'un adressage vers une zone protégée de la mémoire.

Un avantage de la présente invention est qu'elle permet de détecter une tentative de fourniture à l'extérieur d'une donnée considérée comme devant être protégée, que cette tentative soit volontaire (tentative de fraude) ou accidentelle (dysfonctionnement du circuit).

Un autre avantage de l'invention est que cette détection est effectuée au plus près du circuit d'entrée-sortie, ce qui améliore la fiabilité du système.

Selon le mode de réalisation préféré où la comparaison par rapport aux données ou adresses interdites est effectuée par un circuit distinct de l'unité centrale 11, l'invention présente en plus l'avantage de ne pas requérir de temps de cycle de l'unité centrale pour effectuer la détection.

Bien entendu, l'invention est susceptible de diverses variantes et modifications qui apparaîtront à l'homme de l'art. En particulier, si l'invention a été décrite ci-dessus plus particulièrement avec un exemple d'application aux cartes à puce, elle s'applique plus généralement à tous circuits intégrant une mémoire et une unité centrale de traitement, la mémoire contenant certaines données susceptibles d'être autorisées à être fournies à l'extérieur du circuit et d'autres données considérées comme devant rester à l'intérieur du circuit.

De plus, la mise en oeuvre pratique de l'invention est à la portée de l'homme du métier à partir des indications fonctionnelles données ci-dessus, que ce soit sous forme logicielle ou matérielle en utilisant des outils connus.

En outre, les traitements à appliquer en cas de détection d'une tentative de fraude par le procédé ou circuit de l'invention dépendent de l'application et pourront revêtir n'importe quelle forme.

Enfin, bien que l'invention ait été décrite en relation avec un mode de réalisation préféré d'un circuit intégrant l'unité centrale, la mémoire et le circuit d'entrée-sortie, elle s'applique également au cas où tout ou partie de ces éléments sont des circuits distincts, pourvu que l'ensemble puisse être considéré comme un circuit protégé, c'est-à-dire dont les bus de communication entre les éléments ne sont pas accessibles.

## Revendications

1. Procédé de protection d'un circuit intégré (20) contre une extraction de données (DATA) lues dans au moins une mémoire (13), **caractérisé en ce qu'**il consiste :
à comparer chaque mot de données devant sortir du circuit intégré par rapport à au moins une valeur (FDATA) stockée dans ce circuit, ladite valeur (FDATA) étant stockée à plusieurs endroits de la mémoire (13) à des adresses non susceptibles d'être demandées par des programmes fournissant des données à l'extérieur du circuit ; et
à générer un signal d'erreur (ALARM) en cas d'identité entre la valeur et la donnée en attente de sortie.

2. Procédé selon la revendication 1, dans lequel ladite valeur (FDATA) est stockée dans un élément (241) distinct de ladite mémoire (13).

3. Procédé selon la revendication 2, dans lequel ladite valeur (FDATA) est stockée de façon non volatile, de préférence, par inscription matérielle.

4. Procédé selon la revendication 1, dans lequel l'adresse d'un mot de donnée à lire dans la mémoire (13) pour fourniture à l'extérieur du circuit (20) est comparée à au moins une adresse interdite stockée dans le circuit, ledit signal d'erreur (ALARM) étant généré en cas d'identité entre les deux adresses.

5. Circuit intégré comprenant au moins une unité centrale de traitement (11), une mémoire (13) et un circuit d'entrée/sortie (14), **caractérisé en ce qu'**il comporte au moins :
un circuit de détection (24) comportant au moins un élément (241) de mémorisation d'un premier mot de données (FDATA) représentant une valeur stockée à plusieurs endroits de la mémoire à des adresses non susceptibles d'être demandées par des programmes fournissant des données à l'extérieur du circuit, et un comparateur (242) d'un deuxième mot de données (DATA) fourni par un bus interne (15) par rapport audit premier mot, ledit deuxième mot de données représentant une donnée lue dans la mémoire ; et
des moyens de génération d'un signal d'erreur (ALARM) en cas d'identité entre lesdits mots de données.

6. Circuit selon la revendication 5, dans lequel un élément de stockage d'une adresse est contenu dans le circuit de détection (24).

7. Carte à puce contenant un circuit intégré (20) selon l'une quelconque des revendications 5 et 6.

## Claims

1. A method for protecting an integrated circuit (20) against an extraction of data (DATA) read from at least one memory (13), **characterized in that** it comprises:
comparing each data word to be output from the integrated circuit with at least one value (FDATA) stored in this circuit, said value (FDATA) being stored at several locations in the memory (13) at addresses which are not likely to be requested by programs providing data to the outside of the circuit; and
generating an error signal (ALARM) in case of an identity between the value and the data waiting to be output.

2. The method of claim 1, wherein said value (FDATA) is stored in an element (241) distinct from said memory (13).

3. The method of claim 2, wherein said value (FDATA) is stored in non-volatile fashion, preferably, by hardware writing.

4. The method of claim 1, wherein the address of a data word to be read from the memory (13) to be provided to the outside of the circuit (20) is compared with at least one address stored in the circuit, said error signal (ALARM) being generated in case of an identity between the two addresses.

5. An integrated circuit comprising at least a central processing unit (11), a memory (13), an input/output circuit (14), **characterized in that** it comprises at least
one detection circuit (24) comprising at least one element (241) for storing a first data word (FDATA) representing a value stored at several locations in the memory at addresses not likely to be requested by programs providing data to the outside of the circuit, and a comparator (242) of a second data word (DATA), provided by an internal bus (15), with respect to said first word, the second data word representing a data read in the memory; and
means for generating an error signal (ALARM) in case of an identity between said data words.

6. The circuit of claim 5, wherein an address storage element is contained in the detection circuit (24).

7. A smart card containing the integrated circuit (20) of any of claims 5 and 6.

## Patentansprüche

1. Verfahren zum Schützen eines elektronischen Schaltkreises (20) gegen die Extraktion von Daten (DATA), die wenigstens von einem Speicher (13) gelesen werden, **gekennzeichnet durch**
Vergleichen jedes Datenwortes, welches von dem integrierten Schaltkreis ausgegeben werden soll mit wenigstens einem Wert (FDATA), der in diesem Schaltkreis gespeichert ist, wobei dieser Wert (FDATA) an mehreren Stellen im Speicher (13) an Adressen gespeichert ist, welche unwahrscheinlich **durch** Programme abgefragt werden, die Daten nach außerhalb des Schaltkreises liefern; und
Erzeugen eines Fehlersignals (ALARM) im Falle einer Gleichheit des Wertes und der Daten, die warten ausgegeben zu werden.

2. Verfahren nach Anspruch 1, wobei der Wert (FDATA) in einem Element (241) gespeichert wird, das unterschiedlich zum Speicher (13) ist.

3. Verfahren nach Anspruch 2, wobei der Wert (FDATA) in nichtflüchtiger Weise, vorzugsweise durch Hardware gespeichert ist.

4. Verfahren nach Anspruch 1, wobei die Adresse eines vom Speicher (13) zu lesenden Datenwortes, um es nach außerhalb des Schaltkreises (20) zu liefern, mit wenigstens einer Adresse, die im Schaltkreis gespeichert ist, verglichen wird, wobei das Fehlersignal (ALARM) im Fall einer Gleichheit zwischen den beiden Adressen erzeugt wird.

5. Integrierter Schaltkreis, der wenigstens einen Hauptprozessor (11), einen Speicher (13) und einen Eingabe/Ausgabe Schaltkreis (14) aufweist, **dadurch gekennzeichnet, dass** er wenigstens Folgendes aufweist:
einen Detektionsschaltkreis (24), der wenigstens ein Element (241) zum Speichern eines ersten Datenwortes (FDATA) aufweist, das einen Wert repräsentiert, der an mehreren Stellen im Speicher an Adressen gespeichert ist, die unwahrscheinlich durch Programme abgefragt werden, die Daten nach außerhalb des Schaltkreises liefern, und einen Komparator (242) eines zweiten Datenwortes (DATA), das von einem internen Bus (15) hinsichtlich des ersten Wortes bereitgestellt wird, wobei das zweite Datenwort ein Datum repräsentiert, welches im Speicher gelesen wurde; und
Mittel zum Erzeugen eines Fehlersignals (ALARM) im Falle einer Gleichheit zwischen den Datenworten.

6. Schaltkreis nach Anspruch 5, wobei ein Adressenspeicherelement in dem Detektionsschaltkreis (24) enthalten ist.

7. Smart-Card, die den integrierten Schaltkreis (20) nach einem der Ansprüche 5 und 6 enthält.
